# EUROPEAN PATENT APPLICATION

(11) **EP 4 238 944 A1**
(43) Date of publication of application: **06.09.2023**
(21) Application number: 23159714.7
(22) Date of filing: 02.03.2023
(51) Int. Cl.: C03C 3/118, C03C 8/06, C03C 8/08, C03C 8/20

(54) **ENAMEL COMPOSITION, METHOD FOR PREPARATION THEREOF AND COMPONENT FOR COOKING APPLIANCE**

(30) Priority: 03.03.2022 KR 20220027683
(71) Applicant: LG Electronics Inc., Yeongdeungpo-gu Seoul, 07336 (KR)
(72) Inventor: CHOI, Suyeon, 08592 Seoul (KR); YANG, Jaekyung, 08592 Seoul (KR); KIM, Taehee, 08592 Seoul (KR)
(74) Representative: Vossius & Partner Patentanwälte Rechtsanwälte mbB

(57) **Abstract**

There is disclosed a novel enamel composition that may be applied to all diverse components for a cooking appliance, with excellent cleaning performance and adhesion. The enamel composition of the present disclosure may include 10 to 25% by weight of SiO₂, 15 to 30% by weight of P₂O₅, 1 to 15% by weight of B₂O₃, 10 to 25% of at least one of Na₂O, Li₂O and K₂O, 1 to 5% by weight of NaF, 15 to 35% by weight of at least one of Al₂O₃, TiO₂ and ZrO₂, and 1 to 10% by weight of at least one of Fe₂O₃, Co₃O₄ and NiO, thereby being applicable to coating of components for a cooking appliance such as a burner cap, a grate and a griddle in which food is vulnerable to contamination and subject to thermal shock.

## Description

### BACKGROUND

### [Technical Field]

The present disclosure relates to an enamel composition that may wash off all contaminants without water-soaking, a method for preparation thereof and a component for a cooking appliance.

### [Background of the Disclosure]

Enamel is a vitreous glass applied to a surface of a metal plate. Conventional enamel is used for cooking appliances such as microwave ovens and ovens. Cooking appliances such as electric ovens and gas ovens are devices for cooking food using a heating source.

Since contaminants generated during a cooking process adhere to an inner wall of a cavity of such a cooking appliance, it is necessary to clean the inner wall of the cavity. The enamel is coated on the inner wall of the cavity provided in the cooking appliance to facilitate removal of contaminants adhered to the cooking appliance. In general, as one of technologies that may easily clean the inner wall of the cavity, a pyrolysis method is well-known which buts contaminants at high temperatures into ash. A well-known enamel composition to which the pyrolysis method is applied contains components such as P₂O₅, SiO₂, and B₂O₃.

The conventionally known enamel composition must be heated for about 4 hours under high-temperature pyrolysis conditions of 450 to 500 °C to be cleaned. Accordingly, the conventional enamel composition must consume a large amount of energy to be cleaned.

In addition, the conventional enamel composition cannot be cleaned without heat treatment at a high temperature. Accordingly, the conventional enamel composition could be applied to the inside of the cooking appliance but not to the outside thereof.

In addition, the conventional enamel composition requires a soaking process of using moisture for a predetermined time period to remove oil-type contaminants such as cow, pig and poultry oil so that the cleaning process might be complicated, which is a disadvantage of the conventional enamel composition.

The enamel may be applied to various components used in the cooking appliance as well as the inner wall of the cavity.

However, since each component of the cooking appliance has a different material and shape, various enamel compositions are designed to suit the material of the various components. Due to that, manufacturing cost increases and workability deteriorates disadvantageously.

If one enamel composition is applied to all of the various components, there is a disadvantage related to the adhesion between the materials of the components and the enamel coating.

### SUMMARY

One objective of the present disclosure is to provide a novel enamel composition that may allow all types of contaminants thereon to be cleaned at a room temperature.

A further objective of the present disclosure is to provide a novel enamel composition that may all types of contaminants thereof to be cleaned without soaking.

A still further objective of the present disclosure is to provide a novel enamel composition that may be applied to various components of cooking appliances.

Aspects according to the present disclosure are not limited to the above ones, and other aspects and advantages that are not mentioned above can be clearly understood from the following description and can be more clearly understood from the embodiments set forth herein.

An enamel composition according to the present disclosure is characterized in that a composition ratio thereof includes a silico-phosphate ingredient and a catalyst oxide to be applicable to all of components for a cooking appliance and to have all of contaminants on a surface thereof cleanable without soaking.

More specifically, the enamel composition may include 10 to 25% by weight of SiO₂; 15 to 30% by weight of P₂O₅; 1 to 15% by weight of B₂O₃; 10 to 25% by weight of at least one of Na₂O, Li₂O and K₂O; 1 to 5% by weight of NaF; 15 to 35% by weight of at least one of Al₂O₃, TiO₂ and ZrO₂; and 1 to 10% by weight of at least one of Fe₂O₃, Co₃O₄ and NiO.

To match a thermal expansion coefficient with various materials used in components for a cooking appliance, the enamel composition according to the present disclosure may have a novel composition ratio of glass forming factors (e.g., oxides of Si, P and B) and mesh modifiers.

In addition, the enamel composition may have a novel composition ratio of at least one of Fe₂O₃, Co₃O₄ and NiO to enable easy cleaning at room temperature.

In addition, the present disclosure may provide a preparation method of the above-noted enamel composition that includes melting and cooling the enamel composition, and may a component for a cooking appliance that has a surface to which the above-noted enamel coating layer is applied.

The enamel composition according to the present disclosure may be cleaned for all contaminants at room temperature.

In addition, the enamel composition according to the present disclosure may be cleanable for all contaminants without soaking.

In addition, the enamel composition according to the present disclosure may be applicable to various components for a cooking appliance, with excellent adhesion to various components for a cooking appliance.

In addition, since the enamel composition according to the present disclosure is applicable to various components for a cooking appliance, the manufacturing process of the components for the cooking appliance may be simplified and the manufacturing cost may be reduced advantageously.

Specific effects are described along with the above-described effects in the section of Detailed Description.

### [BRIEF DESCRIPTION OF DRAWINGS]

FIG. 1 is a perspective view showing a cooking appliance to which a cooking appliance component according to an embodiment is applied;
FIG. 2 is a photograph showing a burner cap among the cooking appliance components according to an embodiment;
FIG. 3 is a photograph showing a grate among the cooking appliance components according to an embodiment;
FIG. 4 is a photograph showing a griddle among the cooking appliance components according to an embodiment; and
FIG. 5 is a photograph showing adhesion evaluation criteria of examples and comparative examples.

### [DESCRIPTION OF SPECIFIC EMBODIMENTS]

The above-described aspects, features and advantages are specifically described hereunder with reference to the accompanying drawings such that one having ordinary skill in the art to which the present disclosure pertains can easily implement the technical spirit of the disclosure. In the *disclosure, detailed descriptions* of known technologies in relation to the disclosure *are* omitted if they are deemed to *make* the *gist* of the *disclosure* unnecessarily *vague.* Below, preferred embodiments according to the disclosure are specifically described with reference to the accompanying drawings. In the drawings, identical reference numerals can denote identical or similar components.

Hereinafter, expressions of 'a component is provided or disposed in an upper or lower portion' may mean that the component is provided or disposed in contact with an upper surface or a lower surface. The present disclosure is not intended to limit that other elements are provided between the components and on the component or beneath the component.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Throughout the disclosure, the terms "A and/or B" as used herein can denote A, B or A and B, and the terms "C to D" can denote C or greater and D or less, unless stated to the contrary.

Hereinafter, an enamel composition, a method for preparation thereof and components for a cooking appliance according to several embodiments of the present disclosure will be described.

### <Enamel composition>

An enamel composition according to the present disclosure may contain 10 to 25% by weight of SiO₂, 15 to 30% by weight of P₂O₅, 1 to 15% by weight of B₂O₃, 10 to 25% by weight of one or more of Na₂O, Li₂O and K₂O, 1 to 5% by weight of NaF, and 15 to 35% by weight of at least one of ZrO₂ Al₂O₃, and TiO₂, and 1 to 10% by weight of one or more of Fe₂O₃, Co₃O₄ and NiO.

The enamel composition according to the present disclosure is a silico-phosphate-based enamel composition. First, the enamel composition may include SiO₂ that is a component forming a glass structure.

As described above, SiO₂ is a component that forms a glass structure. SiO₂ may enhance a chemical resistance of the enamel composition by strengthening a skeleton of the glass structure and facilitate expression of characteristics of a metal oxide acting as a catalyst. Since it has inferior heat resistance and chemical resistance in comparison to other components, the catalytic metal oxide cannot be contained in the enamel composition in a large amount. However, SiO₂ has a large pore size. When an appropriate amount of SiO₂ is contained in the glass composition, the solubility of the catalytic metal oxide in the glass may be increased. Accordingly, the characteristics of the catalytic metal oxide may be expressed, with excellent heat resistance and chemical resistance, by appropriately controlling the content ratio of SiO₂ and the catalytic metal oxide. The SiO₂ may be contained in the enamel composition in a range of 10 to 25% by weight. If the SiO₂ exceeds 25% by weight, the addition of other components may be hindered, resulting in deterioration of a cleaning function. If the SiO₂ is less than 10% by weight, a problem might occur in that the silico-phosphate glass composition according to the present disclosure collapses.

Next, the enamel composition according to the present disclosure may contain P₂O₅ that is a glass former forming the glass structure like SiO₂. P₂O₅ is a glass former configured to facilitate addition of a large amount of transition metal oxides. The P₂O₅ may be contained in the enamel composition in a range of 15 to 30% by weight. When the P₂O₅ exceeds 30% by weight, the thermal properties of the enamel composition might be deteriorated and vitrification could be difficult. When P₂O₅ is less than 15% by weight, the addition amount of the transition metal oxide contained in the enamel composition could be reduced.

Next, B₂O₃ serves as a glass former and has a function of maintaining an appropriate viscosity during firing of the enamel composition and preventing crystallization of the enamel composition. B₂O₃ may be contained in a glass composition in a range of 1 to 15% by weight. When B₂O₃ exceeds 15% by weight, the addition of other components may be hindered which results in deterioration of the cleaning function. When B₂O₃ is less than 1% by weight, the glass composition might collapse or crystallization of the glass composition might occur.

Li₂O, Na₂O and K₂O may serve to enhance the cleaning function of the enamel composition. At least one of the Li₂O, Na₂O and K₂O may be contained in the enamel composition in a range of 15 to 35% by weight. When the content of the at least one of the Li₂O, Na₂O and K₂O exceeds 35%, the thermal expansion coefficient of the glass might extremely increased, which results in deterioration of coating performance. When the content of the at least one of the Li₂O, Na₂O and K₂O is less than 15%, the cleaning function might be deteriorated

Preferably, the enamel composition according to the present disclosure may include 5% by weight or more of Na₂O.

NaF may also serve to improve the cleaning function of the enamel composition. NaF may be contained in the enamel composition in a range of 1 to 5% by weight. When NaF exceeds 5% by weight, addition of other components might be hindered and durability might be deteriorated. When the content of NaF is less than 1% by weight, the cleaning function might be deteriorated.

Next, the enamel composition according to the present disclosure may include at least one of Al₂O₃, TiO₂ and ZrO₂. Those components may improve the durability of enamel coating. To this regard, the enamel composition according to the present disclosure may include 15 to 35% by weight of at least one of Al₂O₃, TiO₂ and ZrO₂. When the content amount of the at least one of Al₂O₃, TiO₂ and ZrO₂ is less than 15% by weight, the durability of the enamel coating might be deteriorated. In contrast, when the content of the at least one of Al₂O₃, TiO₂ and ZrO₂ exceeds 35% by weight, the crystallization of the enamel composition might occur.

Preferably, the enamel composition of the present disclosure may include 10 % by weight or more of Al₂O₃ to improve durability.

In addition, the enamel composition of the present disclosure may include 1 to 10% by weight of at least one of Fe₂O₃, Co₃O₄, and NiO in order to improve adhesion performance with a base material and realize color. When the content of the at least one of Fe₂O₃, Co₃O₄, and NiO is less than 1% by weight, the enamel coating and the adhesion performance with the base material might be weakened. When the content of the at least one of Fe₂O₃, Co₃O₄, and NiO exceeds 10% by weight, chemical resistance of coating and durability might be deteriorated.

Preferably, the enamel composition of the present disclosure may include Fe₂O₃ and Co₃O₄ in the respective content of 0.1% by weight or more. The total content of Fe₂O₃ and Co₃O₄ may be 1% by weight or more.

The enamel composition described above according to the present disclosure may be designed to be applied to other components for a cooking appliance.

To this regard, in the enamel composition of the present disclosure, the composition ratio of SiO₂, P₂O₅ and B₂O₃ as glass forming components and Na₂O, K₂O and Li₂O as network modifiers may be controlled and adjusted. The composition ratio of the enamel composition according to the present disclosure may be adjusted to match the thermal expansion coefficients of various components.

Also, in the enamel composition of the present disclosure, the contents of the glass formers, network modifiers described above, and Fe₂O₃, Co₃O₄ and NiO may be adjusted in order to realize adhesion with the base material and provide cleaning functionality.

As described above, the enamel composition according to the present disclosure may a composition system in which the components implementing glass and the components having the catalytic function are optimized. Accordingly, the enamel composition may be applied to various components of a cooking appliance and also may clean all contaminants at a room temperature without soaking.

### <Preparation method of the enamel composition>

Hereinafter, a preparation method of an enamel composition according to the present disclosure may include providing an enamel composition raw material containing the ingredients described above; melting the enamel composition material; and cooling the melted composition material.

After the enamel composition material is sufficiently mixed, the enamel composition material may be melted. Preferably, the composition material may be melted in a temperature range of 1200 to 1400°C. In addition, the composition material may be melted for 1 to 2 hours.

Hence, the melted composition material may be cooled quickly by a quenching roller. Accordingly, the enamel composition may be prepared.

### <Components for a cooking appliance>

Hence, the enamel composition according to the present disclosure may be coated on one surface of a coating target (e.g., a component for a cooking appliance).

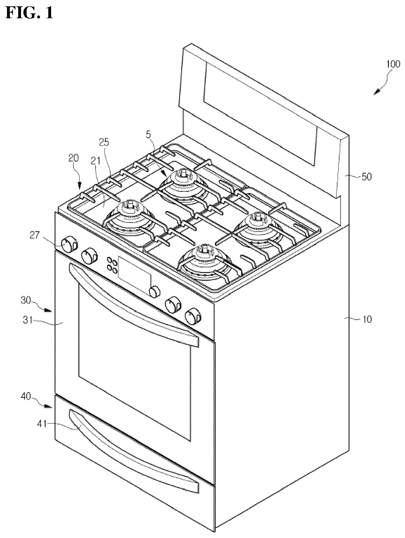

FIG. 1 is a perspective view showing a cooking appliance to which a cooking appliance component according to an embodiment is applied.

As shown in FIG. 1, the cooking appliance 100 may include a cabinet 10, a cook top unit 20, and an oven unit 30. The cooking appliance 100 may further include a drawer unit 40 and a control panel 50.

The cabinet 10 may define an exterior design of the cooking appliance 100 and may have a hexahedral box shape, but the present disclosure is not limited thereto.

The cook top unit 20 may be mounted on the cabinet 10 and include at least one grate 25 for supporting a cooking target heated by a burner 5. The grate 25 may be one of the components for the cooking appliance according to an embodiment of the present disclosure.

The cook tope unit 20 may further include a top plate 21 and a manipulation knob 27. In the drawing, it is shown that four burners 5 are provided on the top plate. That is one of the examples and the number of the burners 5 may be variable. Such the burner 5 may be configured to generate a flame for heating the cooking target (i.e., food) by burning a gas mixture mixed with air. The manipulation knob 27 may be provided for allowing a user's manipulation of operating the burner 5. Although not shown in FIG. 1, a burner cap as the component for the cooking appliance according to an embodiment may be coupled to the burner 5. The burner cap means a component configured to safely protect the burner even if the cooking target or food overflows during the cooking and prevent gas flame from being turned off.

The oven unit 30 may be disposed inside the cabinet 10 corresponding to a lower portion of the cook top unit 20. The oven unit 30 may include a cavity defining a cooking chamber, and a door 31 configured to selectively open and close the cooking chamber. In other words, the oven unit 30 may be provided with the cooking chamber in which the cooking target is cooked. The cooking chamber may be selectively open and closed by the door 31. Although not shown in the drawings, at least one heating source for heating (e.g., a broil burner, a bake burner and a convection device) may be mounted inside the cooking chamber.

The drawer unit 40 may be provided inside the cabinet 10 disposed in a lower portion of the cabinet, corresponding to the oven unit 30. Such the drawer unit 40 may be configured to warm a container containing food. The drawer unit 40 may include a drawer 41 configured to slidingly move into and out of the inside of the cabinet 10 and accommodate a container.

The control panel 50 may be disposed on an upper rear end of the cabinet 10, corresponding to a rear portion of the cook top unit 20. The control panel 50 may be configured to receive an input signal for operations of the oven unit 30 and the drawer unit 40 and display information about the operations.

Although not shown in FIG. 1, a griddle as the component for the cooking appliance according to an embodiment may be provided in the cooking appliance 100. The griddle is a large, thick iron plate used for cooking. Various foods may be easily cooked by applying heat to the griddle, and the griddle may be used in a state of being placed on the burner.

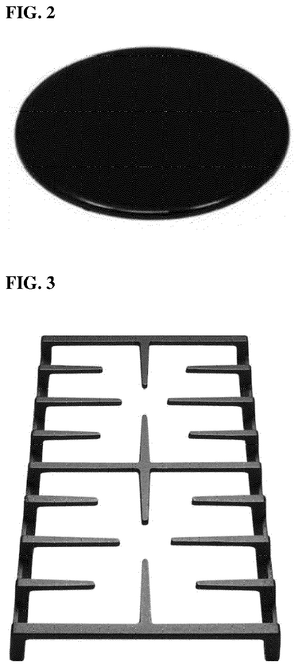

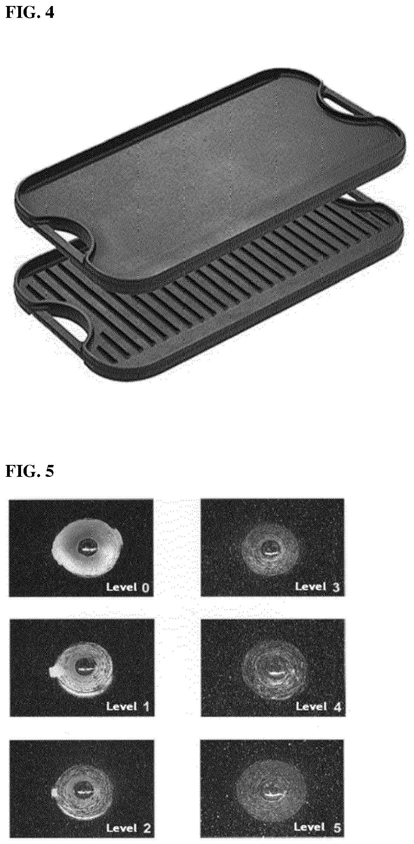

Referring to FIGS. 2 to 4, a burner cap, a grate and a griddle according to an embodiment of the present disclosure are shown as components for a cooking appliance.

The enamel composition may be coated on a surface of the component for a cooking appliance such as the burner cap, the grate and the griddle.

Specifically, the enamel composition according to the present disclosure may be coated on the surfaces of the components for the cooking appliance through a dry process or a wet process.

Hereinafter, specific aspects of the present disclosure will be described through embodiments.

### <Examples>

### <Preparation of Enamel composition>

An enamel composition having a composition ratio shown in Table 1 was prepared. Raw materials of the ingredients were sufficiently mixed in a V-mixer for three hours. Na₂CO₃, K₂CO₃, Li₂CO₃ were used as the respective raw materials of Na₂O, K₂O and Li₂O and the rest of the ingredients were the same as those listed in Table 1. The mixed materials were sufficiently melted at 1300°C for 1 hour and then quick-cooled in a quenching roller to obtain a glass cullet.

After the glass cullet obtained in the above process is mixed as shown in Table 2 below and then mixed for about 10 hours, to prepare a slip. The particle size of the prepared slip was controlled to such an extent that 1g to 3g of frit remaining when the 60cc slip passed through a 325 mesh sieve (ASTM C285-88).

**[Table 1]**

| ingredient weight%) | Examples | | | | Comparative examples | |
|---|---|---|---|---|---|---|
| | 1 | 2 | 3 | 4 | 1 | 2 |
| SiO₂ | 13.49 | 12.39 | 13.49 | 11.49 | 8.58 | 13.6 |
| P₂O₅ | 24.89 | 24.89 | 26.52 | 24.89 | 25.07 | 25.05 |
| B₂O₃ | 7.1 | 7.1 | 9.3 | 10.1 | 7.15 | 7.15 |
| Na₂O | 12.97 | 12.97 | 10.54 | 12.97 | 15.05 | 13.05 |
| K₂O | 16.83 | 16.83 | 16.83 | 17.83 | 18.94 | 16.94 |
| Li₂O | 0.81 | 0.91 | 0.81 | 0.81 | 2.81 | 0.81 |
| NaF | 1.6 | 1.6 | 1.6 | 1.6 | 1.61 | 1.61 |
| Al₂O₃ | 14.85 | 15.85 | 12.65 | 11.85 | 13.2 | 16.1 |
| TiO₂ | 2.63 | 2.63 | 3.35 | 2.63 | 2.62 | 2.45 |
| Fe₂O₃ | 1.42 | 1.42 | 1.5 | 2.42 | 1.5 | 0.7 |
| Co₃O₄ | 0.53 | 0.53 | 0.53 | 0.53 | 0.43 | 0 |
| NiO | 0.25 | 0.25 | 0.25 | 0.25 | 1.06 | 0.56 |
| ZrO₂ | 2.63 | 2.63 | 2.63 | 2.63 | 1.98 | 1.98 |

**[Table 2]**

| Ingredients | Mixing ratio (by weight) |
|---|---|
| Glass cullet | 100 |
| Water | 50 |
| Ball clay | 5 |
| Aluminum oxide | 3 |
| Borax | 0.2 |
| Bentonite | 0.2 |
| Sodium nitrite | 0.3 |

### <Preparation of Enamel composition specimens>

The enamel frit prepared as described above was coated on surfaces of the burner cap, grate and griddle by using a spray gun, respectively. After the coating, a drying process may be performed at 200°C to 250°C for 5 to 10 minutes and then the coated layer was baked for 300 to 420 seconds at a temperature condition of 810 °C to 830 °C.

### <Experimental example 1-Cleaning performance evaluation>

Cleaning performance of the specimens according to the Examples and Comparative examples was evaluated as follows.

According to a method of measuring the cleaning performance, 1g of chicken oil as a contaminant was applied on the surface of the specimen according to Examples and Comparative examples evenly and thinly with a brush. Hence, the specimen coated with the contaminant was placed in a thermostat and the contaminant was solidified under conditions of a temperature of 270°C and a time period of 30 minutes. After the solidification, the specimen was naturally cooled. After that, the hardened chicken oil was wiped with a scrubber for frying fans soaked in room-temperature water with a force of less than 3khf. A flat-bottomed bar with a diameter of 5cm was used to level the area to be wiped from the contaminated enamel surface. At this time, the number of reciprocating wiping actions was measured and defined as the number of cleanings. The evaluation index is the same as Table at the bottom left.

**[Table 3]**

| **Cleaning reciprocations** | **Level** |
|---|---|
| **∼ 5** | **5** |
| **∼ 15** | **4** |
| **∼ 25** | **3** |
| **∼ 50** | **2** |
| **50 ∼** | **1** |

### <Experimental example 2-Adhesion performance evaluation>

Adhesion performance of Examples and Comparative examples was measured. According to a method of measuring the adhesion, Dupont Impact Tester (ASTM D1794, JIS K5400) was used. A test specimen was placed in the center of a sample stage and a steel ball with a diameter of about 25.4mm (i.e., 1 inch) was installed at the center of a flat portion of the specimen. Then, an iron piece weighing 2kg fell freely from a height of 300mm, in order to investigate a state of enamel peeling. The criterion for determining the level of adhesion is based on the criterion shown in FIG. 3.

### <Results of Experimental examples>

The results of Experimental examples are shown in Table 4.

**[Table 4]**

| | Example 1 | Example 2 | Example 3 | Example 4 | Comparative example 1 |
|---|---|---|---|---|---|
| Chicken coil cleanability | Lv. 4 | Lv. 4 | Lv. 4 | Lv. 4 | Lv. 1 |
| Tomato source cleanability | Lv. 5 | Lv. 5 | Lv. 5 | Lv. 5 | Lv. 2 |
| Adhesion | Lv. 5 | Lv. 5 | Lv. 5 | Lv. 5 | Lv. 0 |

According to the result of evaluation, all contaminants were easily removed at room temperature in test specimens of Examples 1 to 4. In contrast, all contaminants were not removed at room temperature in Comparative example. In addition, Examples have excellent cleaning performance and adhesion at the same time. However, Comparative example has poor adhesion.

The embodiments are described above with reference to a number of illustrative embodiments thereof. However, the present disclosure is not intended to limit the embodiments and drawings set forth herein, and numerous other modifications and embodiments can be devised by one skilled in the art. Further, the effects and predictable effects based on the configurations in the disclosure are to be included within the range of the disclosure though not explicitly described in the description of the embodiments.

### [Description of Reference Numerals]

100: Cooking appliance
5: Burner
10: Cabinet
20: Cook top unit
21: Plate
25: Grate
27: Manipulation knob
30: Oven unit
31: Door
40: Drawer unit
41: Drawer
50: Control panel

## Claims

1. An enamel composition comprising:
10 to 25% by weight of SiO₂;
15 to 30% by weight of P₂O₅;
1 to 15% by weight of B₂O₃;
10 to 25% of at least one of Na₂O, Li₂O and K₂O;
1 to 5% by weight of NaF;
15 to 35% by weight of at least one of Al₂O₃, TiO₂ and ZrO₂; and
1 to 10% by weight of at least one of Fe₂O₃, Co₃O₄ and NiO.

2. The enamel composition of claim 1, wherein the content amount of Na₂O is 5% by weight or more.

3. The enamel composition of claim 1 or 2, wherein the content amount of the Al₂O₃ is 5% by weight or more.

4. The enamel composition of any of claims 1 to 3, wherein the content amount of each of the Fe₂O₃ and the Co₃O₄ is 0.1% by weight or more.

5. The enamel composition of any of claims 1 to 4, wherein the total content amount of the Fe₂O₃ and Co₃O₄ is 1% by weight or more.

6. A preparation method of an enamel composition, comprising:
providing raw materials of an enamel composition comprising 10 to 25% by weight of SiO₂, 15 to 30% by weight of P₂O₅, 1 to 15% by weight of B₂O₃, 10 to 25% of at least one of Na₂O, Li₂O and K₂O, 1 to 5% by weight of NaF, 15 to 35% by weight of at least one of Al₂O₃, TiO₂ and ZrO₂ and 1 to 10% by weight of at least one of Fe₂O₃, Co₃O₄ and NiO;
melting the raw materials of the enamel composition; and
cooling the melted enamel composition.

7. The preparation method of an enamel composition of claim 6, wherein the enamel composition comprises 5% by weight or more of the Na₂O.

8. The preparation method of an enamel composition of claim 6 or 7, wherein the enamel composition comprises5% by weight or more of the Al₂O₃.

9. The preparation method of an enamel composition of any of claims 6 to 8, wherein the enamel composition comprises 0.1% by weight or more of each of the Fe₂O₃ and Co₃O₄.

10. The preparation method of an enamel composition of any of claims 6 to 9, wherein the total content of the Fe₂O₃ and Co₃O₄ is 1 % by weight or more.

11. A component for a cooking appliance, with a surface on which an enamel coating layer is formed, the enamel coating layer formed from an enamel composition comprising:
10 to 25% by weight of SiO₂;
15 to 30% by weight of P₂O₅;
1 to 15% by weight of B₂O₃;
10 to 25% of at least one of Na₂O, Li₂O and K₂O;
1 to 5% by weight of NaF;
15 to 35% by weight of at least one of Al₂O₃, TiO₂ and ZrO₂ ; and
1 to 10% by weight of at least one of Fe₂O₃, Co₃O₄ and NiO.

12. The component for the cooking appliance of claim 11, wherein the component is selected from a cap for a burner, grate, and a griddle.

13. The component for the cooking appliance of claim 11 or claim 12, wherein the enamel composition comprises 5% by weight or more of the Na₂O.

14. The component for the cooking appliance of any of claims 11 to 13, wherein the enamel composition comprises 5% by weight or more of the Al₂O₃.

15. The component for the cooking appliance of any of claims 11 to 14, wherein the enamel composition comprises 0.1% by weight or more of each of the Fe₂O₃ and Co₃O₄.

16. The component for the cooking appliance of any of claims 11 to 15, wherein the total content of the Fe₂O₃ and Co₃O₄ is 1% by weight or more.
